# EUROPEAN PATENT SPECIFICATION

(11) **EP 2 857 078 B1**
(45) Date of publication and mention of the grant of the patent: **09.12.2020**
(21) Application number: 13187077.6
(22) Date of filing: 02.10.2013
(51) Int. Cl.: B01D 29/01, B07B 1/46, B32B 5/02, B32B 27/12, B32B 3/16, B32B 3/30, D21F 7/08

(54) **Patterned fabric with an image pattern**
Strukturiertes Gewebe mit einem Bildmuster
Tissu à motif avec motif d'image

(43) Date of publication of application: 08.04.2015
(73) Proprietor: Huang, Chen-Cheng, Taipei City 105 (TW); Huang, Pao-Han, 105 Taipei City (TW); Huang, Pao-Hao, Taipei City 105, Taiwan (TW)
(72) Inventor: Huang, Chen-Cheng, Taipei City 105 (TW); Huang, Pao-Han, 105 Taipei City (TW); Huang, Pao-Hao, Taipei City 105, Taiwan (TW)
(74) Representative: Michalski Hüttermann & Partner Patentanwälte mbB

(56) References cited:
- EP-A1- 0 037 387
- EP-A1- 2 031 125
- EP-A2- 0 196 045
- DE-A1- 4 139 634
- US-A1- 2004 256 310
- US-A1- 2007 048 498
- US-A1- 2013 263 738

## Description

### BACKGROUND OF THE INVENTION

### 1. Field of the Invention

This invention relates to a patterned fabric with an image pattern, more particularly to a patterned fabric including a fabric sheet and a perforated plastic film bonded to the fabric sheet and having an image pattern.

### 2. Description of the Related Art

Fabrics can be used for applications, such as garments, curtains, sofas, chairs, shoes, luggages, backpacks, etc., and are commonly interwoven, dyed or printed with an image pattern for attracting attention of consumers.

U.S. Patent No. 5, 847, 740 discloses a method of making an ink-printing cloth that includes the steps of preparing a cloth with a water content of 10 to 110 %, pretreating the cloth for subsequent processing, applying an ink to the cloth, subjecting the cloth to a dyeing treatment, and washing the cloth so as to form an image pattern on the cloth.

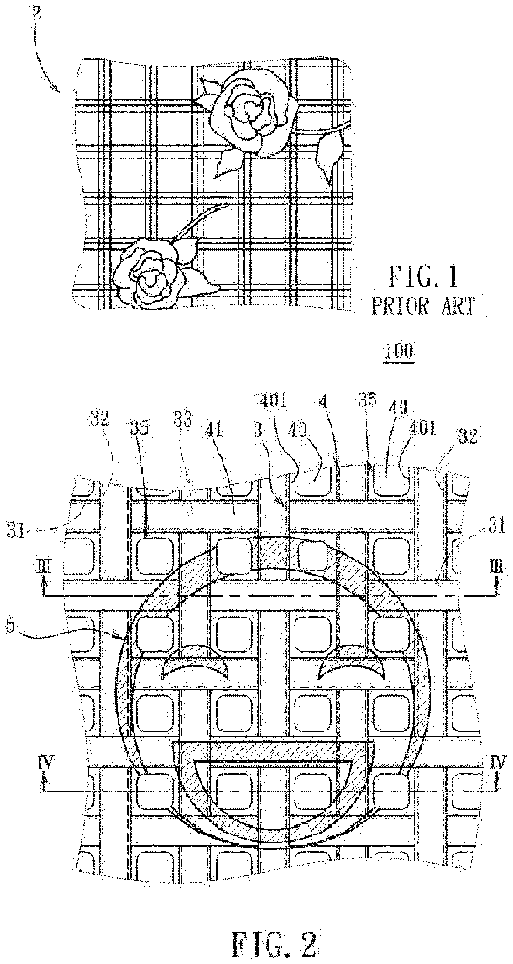

U.S. Patent Application Publication No. 2009/0061173 discloses a method of making a fabric 2 with a colored pattern (see Fig. 1) that includes the steps of providing a fabric having a manmade fiber layer and a natural fiber layer, providing a printing board for each color, printing a desired colored pattern on a printing area of the fabric using a corresponding printing board, printing an etching agent on another area of the fabric, and etching the area that is printed with the etching agent so as to form the colored pattern on the fabric 2.

The aforementioned conventional methods are complicate and the fabrics thus formed are expensive.

### SUMMARY OF THE INVENTION

Therefore, an object of the present invention is to provide a patterned fabric that can overcome the aforesaid drawbacks associated with the prior art.

According to one aspect of this invention, there is provided a patterned fabric with an image pattern. The patterned fabric includes: a fabric sheet having opposite first and second surfaces and a plurality of pores extending through the first and second surfaces, each of the pores being defined by a pore-defining wall; and a plastic film bonded to the first surface of the fabric sheet and having opposite first and second faces and an image pattern formed on the first face. The plastic film is perforated to form a plurality of through-holes extending through the first and second faces. Each of the through-holes is defined by a hole-defining wall. The hole-defining wall of each of the through-holes extends into a respective one of the pores and wraps around and is bonded to at least a portion of the pore-defining wall of the respective one of the pores.

According to another aspect of this invention, there is provided a method of making a patterned fabric with an image pattern. The method includes : (a) stacking a fabric sheet on a screen mold, the fabric sheet having opposite first and second surfaces and a plurality of pores extending through the first and second surfaces, each of the pores being defined by a pore-defining wall; (b) stacking a plastic film, which is printed with an image pattern, on the fabric sheet on the screen mold; (c) heating and softening the plastic film on the fabric sheet after step (b) ; (d) perforating the plastic film through vacuum perforation techniques using a suctioning device after step (c) so as to form a plurality of through-holes in the plastic film and a plurality of hole-defining walls, which define the through-holes, which extend into the pores, and which wrap around and are melt bonded to the pore-defining walls of the pores, respectively, thereby forming a patterned fabric on the screen mold; and (e) cooling and removing the patterned fabric from the screen mold.

### BRIEF DESCRIPTION OF THE DRAWINGS

In drawings which illustrate embodiments of the invention,
Fig. 1 is a schematic view of a conventional patterned fabric with an image pattern;
Fig. 2 is a schematic top view of the first preferred embodiment of a patterned fabric according to the present invention;
Fig. 3 is a sectional view taken along lines III-III in Fig. 2
Fig. 4 is a sectional view taken along lines IV-IV in Fig. 2;
Fig. 5 is a flow chart illustrating consecutive steps of a method of making a patterned fabric with an image pattern according to the present invention;
Fig. 6 is a schematic view illustrating how a plastic film is perforated and bonded to a fabric sheet on a screen mold using a suctioning device according to the method of the present invention;
Fig. 7 is a picture showing a plastic film printed with an image pattern, which is used in the method of making an embodiment of the patterned fabric of the present invention;
Fig. 8 is a picture showing a fabric sheet, which is used in the method of making the embodiment of the patterned fabric of the present invention;
Fig. 9 is a picture showing a front side of the embodiment of the patterned fabric of the present invention;
Fig. 10 is an enlarged picture of a portion of the patterned fabric of Fig. 9;
Fig. 11 is a picture showing a back side of the embodiment of the patterned fabric of the present invention; and
Fig. 12 is a sectional view of the second preferred embodiment of the patterned fabric according to the present invention.
Fig. 13 is a schematic top view of the third preferred embodiment of a mesh screen assembly according to the present invention;
Fig. 14 is a sectional view taken along lines IV-IV in Fig. 13;
Fig. 15 is a sectional view taken along lines V-V in Fig. 13;
Fig. 16 is a flow chart illustrating consecutive steps of a method of making a mesh screen assembly with an image pattern according to the present invention;
Fig. 17 is a schematic view illustrating how a plastic film is perforated and bonded to a mesh screen on a screen mold using a suctioning device according to the method of the present invention;
Fig. 18 is a picture showing a plastic film printed with an image pattern, which is used in the method of making an embodiment of the mesh screen assembly of the present invention;
Fig. 19 is a picture showing a mesh screen, which is used in the method of making the embodiment of the mesh screen assembly of the present invention;
Fig. 20 is a picture showing a front side of the embodiment of the mesh screen assembly of the present invention;
Fig. 21 is an enlarged picture of a portion of the mesh screen assembly of Fig. 20;
Fig. 22 is a picture showing a back side of the embodiment of the mesh screen assembly of the present invention; and
Fig. 23 is a sectional view of the fourth preferred embodiment of the mesh screen assembly according to the present invention.

### DETAILED DESCRIPTION OF THE PREFERRED EMBODIMENTS

Before the present invention is described in greater detail with reference to the accompanying preferred embodiments, it should be noted herein that like elements are denoted by the same reference numerals throughout the disclosure.

Figs. 2 to 4 illustrate the first preferred embodiment of a patterned fabric 100 accordingto the present invention. The patterned fabric 100 has front and back sides, and includes: a fabric sheet 3 having opposite first and second surfaces 33, 34 that respectively correspond to the front and back sides of the patterned fabric 100, and a plurality of pores 35 extending through the first and second surfaces 33, 34, each of the pores 35 being defined by a pore-defining wall 351; and a plastic film 4 bonded to the first surface 33 of the fabric sheet 3 and having opposite first and second faces 41, 42 and an image pattern 5 formed on the first face 41 so that the image pattern 5 can be seen from the front side of the patterned fabric 100. The plastic film 4 is perforated to form a plurality of through-holes 40 extending through the first and second faces 41, 42. Each of the through-holes 40 is defined by a hole-defining wall 401. The hole-defining wall 401 of each of the through-holes 40 extends into a respective one of the pores 35 and wraps around and is bonded to a portion of the pore-defining wall 351 of the respective one of the pores 35.

The fabric sheet 3 is in the form of a woven fabric having warp yarns and weft yarns 31, 32 that are interlaced to form the pores 35. Alternatively, the fabric sheet 3 can be a non-woven fabric (not shown) having a plurality of fibers bonded together.

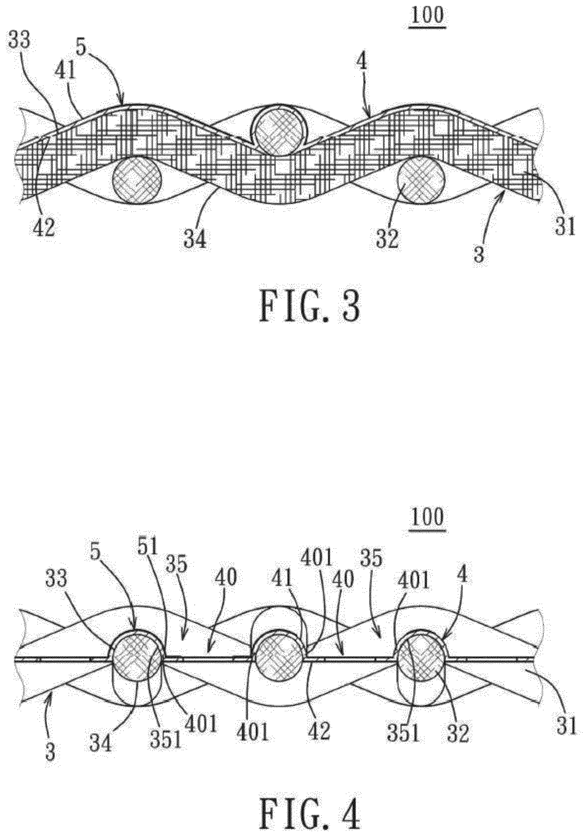

Preferably, at least a portion 51 of the image pattern 5 (see Fig. 4) extends into adjacent ones of the pores 35, and is disposed on the corresponding pore-defining walls 351, thereby permitting viewing of the portion 51 of the image pattern 5 at an inclined angle relative to the first surface 33 of the fabric sheet 3.

Preferably, the pores 35 in the fabric sheet 3 have a diameter ranging from 70 µm to 2 cm.

The image pattern 5 is made from an ink material printed on the plastic film 4 through conventional ink printing techniques.

Preferably, the plastic film 4 is made from a thermoplastic material selected from the group consisting of polyolefins, polyesters and thermoplastic elastomers.

Preferably, the plastic film 4 has a thickness ranging from 15 µm to 70 µm.

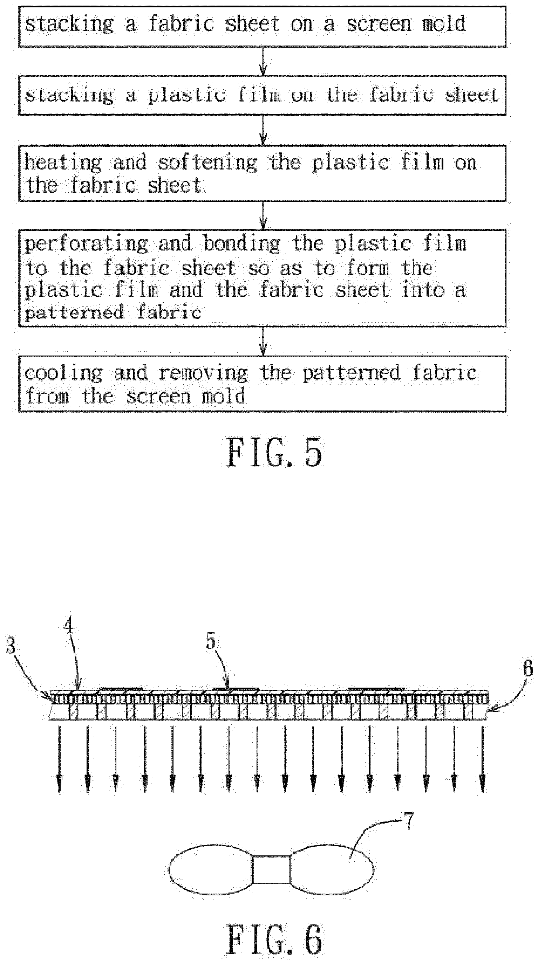

Fig. 5, in combination with Fig. 6, illustrates consecutive steps of a method of making the first preferred embodiment. The method includes the steps of: (a) stacking the fabric sheet 3 on a screen mold 6; (b) stacking the plastic film 4, which is printed with the image pattern 5, on the fabric sheet 3 on the screen mold 6; (c) heating and softening the plastic film 4 on the fabric sheet 3 after step (b) ; (d) perforating the plastic film 4 through vacuum perforation techniques using a suctioning device 7 after step (c) so as to form the through-holes 40 in the plastic film 4 and permit melt bonding of the plastic film 4 to the fabric sheet 3, thereby forming the patterned fabric 100 on the screen mold 6; and (e) cooling and removing the patterned fabric 100 from the screen mold 6. The fabric sheet 3 is made from a material having a melting point higher than that of the thermoplastic material of the plastic film 4.

The printing of the image pattern 5 on the plastic film 4 can be accomplished using conventional printing techniques. Since the printing technology on a plastic film is well developed, the method of the present invention for forming the image pattern 5 on the fabric sheet 3 becomes relatively simple and easy. In addition, high resolution of the image pattern 5 on the fabric sheet 3 can be easily realized. Furthermore, mass production of the patterned fabric 100 of the present invention can be easily achieved.

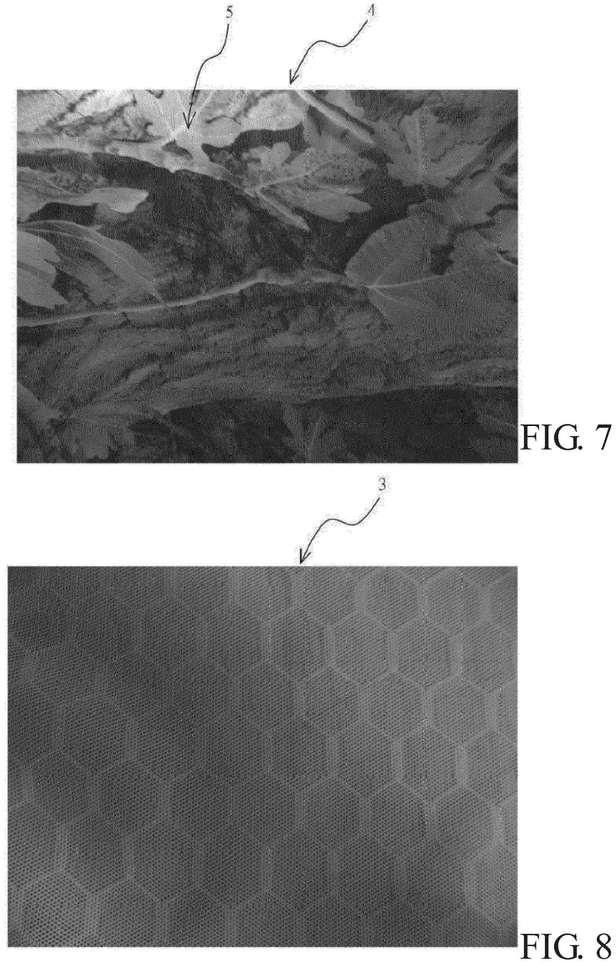

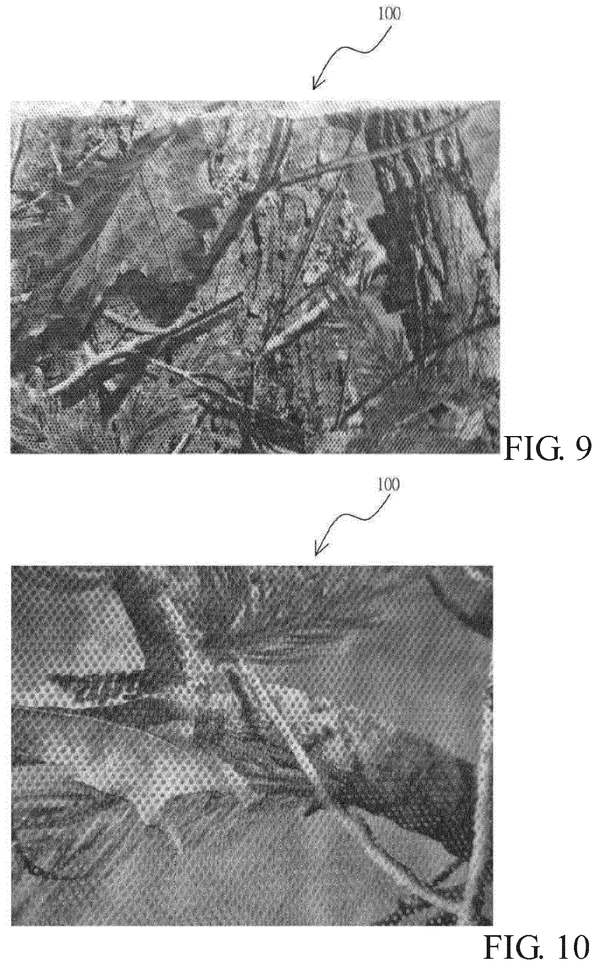

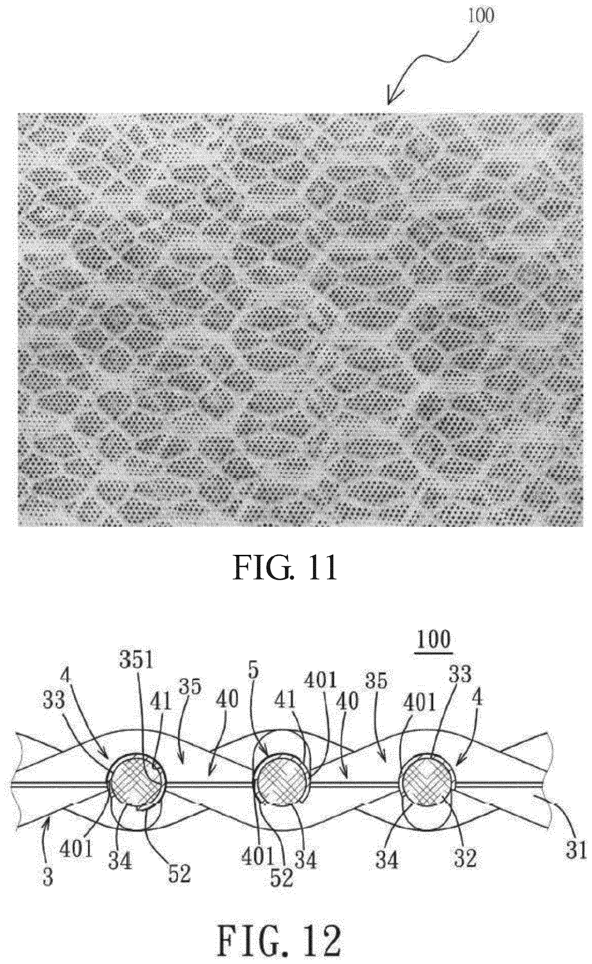

Figs. 7 and 8 show the plastic film 4 printed with the image pattern 5 and the fabric sheet 3, respectively, before perforating the plastic film 4 and bonding of the plastic film 4 to the fabric sheet 3 to form an embodiment of the patterned fabric 100. Fig. 9 shows the front side of the embodiment of the patterned fabric 100 made from the plastic film 4 of Fig. 7 and the fabric sheet 3 of Fig. 8. Fig. 10 shows a portion of the patterned fabric 100 of Fig. 9. Fig. 11 shows the back side of the embodiment of the patterned fabric 100 made from the plastic film 4 of Fig. 7 and the fabric sheet 3 of Fig. 8. It is noted that the plastic film 4 has a first non-perforated pattern corresponding to a texture pattern of the fabric sheet 3, and a second non-perforated pattern corresponding to a texture pattern of the screen mold 6 used for forming the through-holes 40 in the plastic film 4.

On the other hand, referring to Fig. 11 again, the back side of the embodiment of the patterned fabric 100 looks different from the front side thereof, because the warp yarns 31 and weft yarns 32 of fabric sheet 3 are interlaced just like a honeycomb 36. In fact, they can be arranged into many structural patterns. That is to say, two sides of the embodiment of the patterned fabric 100 can show different patterns if necessary.

Fig. 12 illustrates the second preferred embodiment of the patterned fabric 100 according to the present invention. The second preferred embodiment differs from the previous embodiment in that the hole-defining wall 401 of each of the through-holes 40 further extends through the respective one of the pores 35, and further wraps around and is bonded to a portion of the second surface 34 of the fabric sheet 3. In this embodiment, at least a portion 52 of the image pattern 5 extends through adjacent ones of the pores 35, and is disposed on the portion of the second surface 34 of the fabric sheet 3, thereby permitting viewing of the portion 52 of the image pattern 5 from the back side of the patterned fabric 100.

With the inclusion of the plastic film 4, that has the image pattern 5 and that is bonded to the fabric sheet 3, in the patterned fabric 100 of the present invention, the aforesaid drawbacks associated with the prior art can be eliminated.

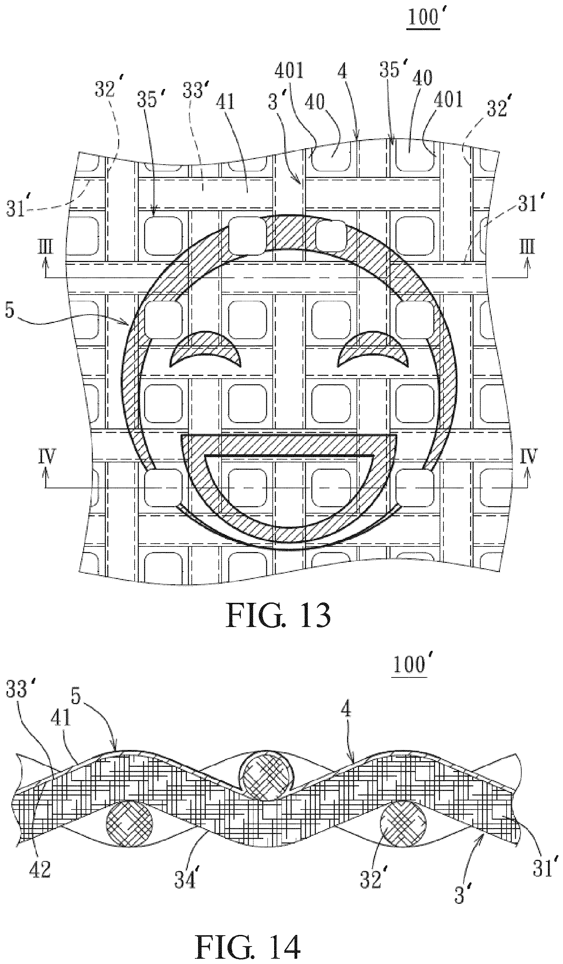

Figs. 13 to 15 illustrate the third preferred embodiment. It is a mesh screen assembly 100' according to the present invention. The mesh screen assembly 100' has front and back sides, and includes: a mesh screen 3' having opposite first and second surfaces 33', 34' that respectively correspond to the front and back sides of the mesh screen assembly 100', and a plurality of screen-holes 35' extending through the first and second surfaces 33', 34', each of the screen-holes 35' being defined by a hole-defining wall 351'; and a plastic film 4 bonded to the first surface 33' of the mesh screen 3' and having opposite first and second faces 41, 42 and an image pattern 5 formed on the first face 41. The plastic film 4 is perforated to form a plurality of apertures 40 extending through the first and second faces 41, 42. Each of the apertures 40 is defined by an aperture-defining wall 401. The aperture-defining wall 401 of each of the apertures 40 extends into a respective one of the screen-holes 35' and wraps around and is bonded to a portion of the hole-defining wall 351' of the respective one of the screen-holes 35'.

The mesh screen 3' has warp threads and weft threads 31', 32' that are interlaced to form the screen-holes 35'.

Preferably, at least a portion 51 of the image pattern 5 (see Fig. 14) extends into adjacent ones of the screen-holes 35', and is disposed on the corresponding hole-defining walls 351', thereby permitting viewing of the portion 51 of the image pattern 5 at an inclined angle relative to the first surface 33' of the mesh screen 3'.

Preferably, the screen-holes 35' in the mesh screen 3' have a diameter ranging from 70 µm to 2 cm.

The image pattern 5 is made from an ink material printed on the plastic film 4 through conventional ink printing techniques.

Preferably, the plastic film 4 is made from a thermoplastic material selected from the group consisting of polyolefins, polyesters and thermoplastic elastomers.

Preferably, the plastic film 4 has a thickness ranging from 15 µm to 70 µm.

The aperture-defining wall 401 of each of the apertures 40 is preferably truncated conical in shape, and is tapered from the front side of the mesh screen assembly 100' toward the back side of the mesh screen assembly 100' so that the mesh screen assembly 100' is capable of providing different visibilities therethrough when viewing from the front and back sides, respectively. As such, the size of each of the apertures 40 can be designed to allow a person standing at the front side of the mesh screen assembly 100' to be able to see through the apertures 40 in the mesh screen assembly 100', and to prevent a person standing at the back side of the mesh screen assembly 100' from being able to see through the apertures 40 in the mesh screen assembly 100'.

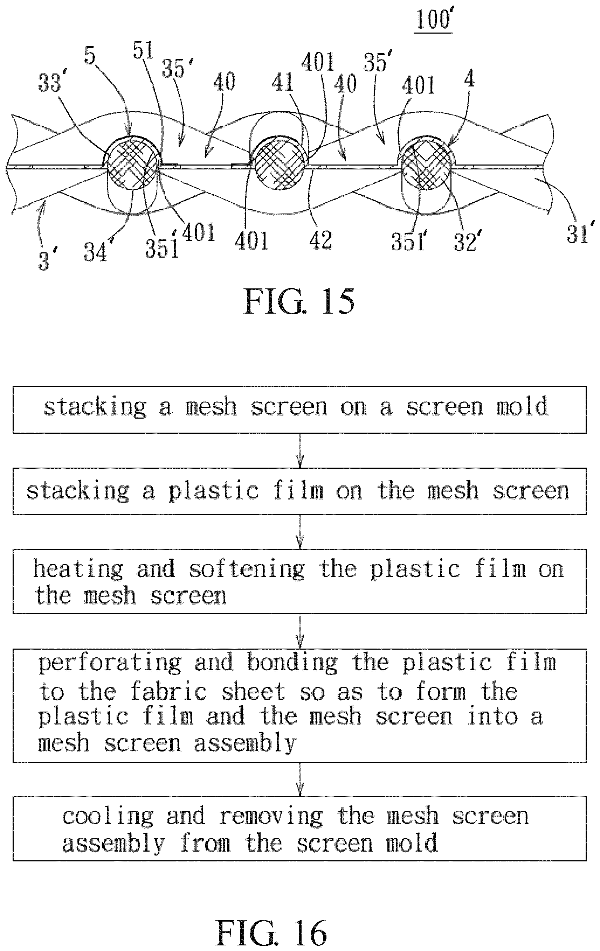

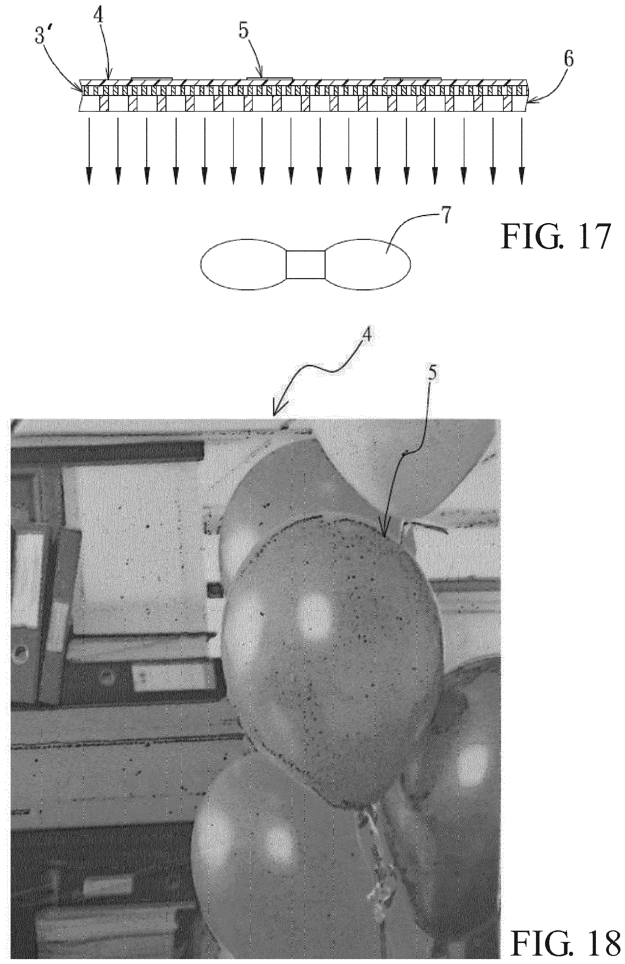

Fig. 16, in combination with Fig. 17, illustrates consecutive steps of a method of making the first preferred embodiment. The method includes the steps of: (a) stacking the mesh screen 3' on a screen mold 6; (b) stacking the plastic film 4, which is printed with the image pattern 5, on the mesh screen 3' on the screen mold 6; (c) heating and softening the plastic film 4 on the mesh screen 3' after step (b) ; (d) perforating the plastic film 4 through vacuum perforation techniques using a suctioning device 7 after step (c) so as to form the apertures 40 in the plastic film 4 and permit melt bonding of the plastic film 4 to the mesh screen 3', thereby forming the mesh screen assembly 100' on the screen mold 6; and (e) cooling and removing the mesh screen assembly 100' from the screen mold 6. The mesh screen 3' is made from a material having a melting point higher than that of the thermoplastic material of the plastic film 4.

The printing of the image pattern 5 on the plastic film 4 can be accomplished using conventional printing techniques. Since the printing technology on a plastic film is well developed, the method of the present invention for forming the image pattern 5 on the mesh screen 3' becomes relatively simple and easy. In addition, high resolution of the image pattern 5 on the mesh screen 3' can be easily realized. Furthermore, mass production of the mesh screen assembly 100' of the present invention can be easily achieved.

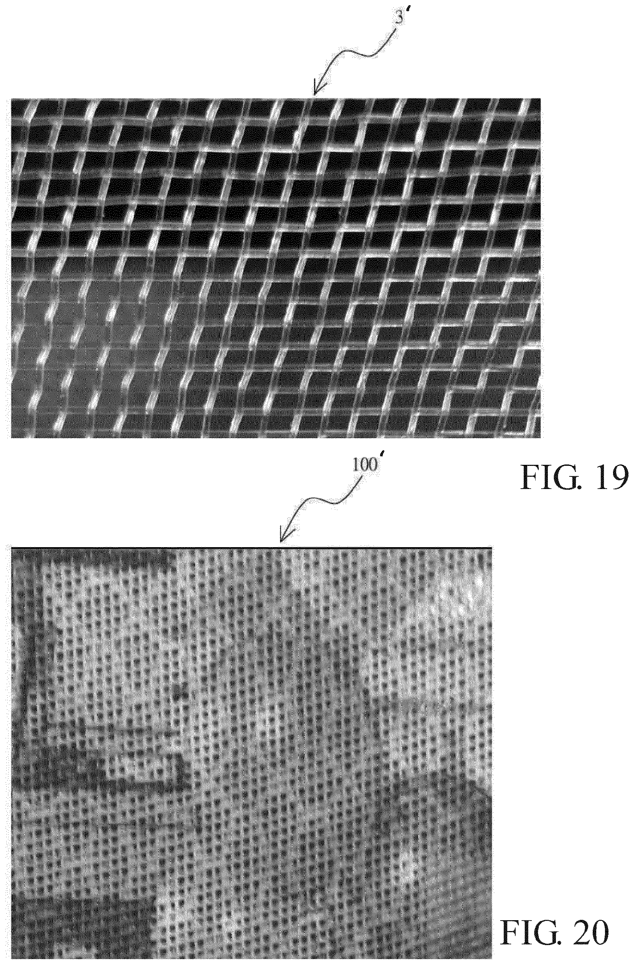

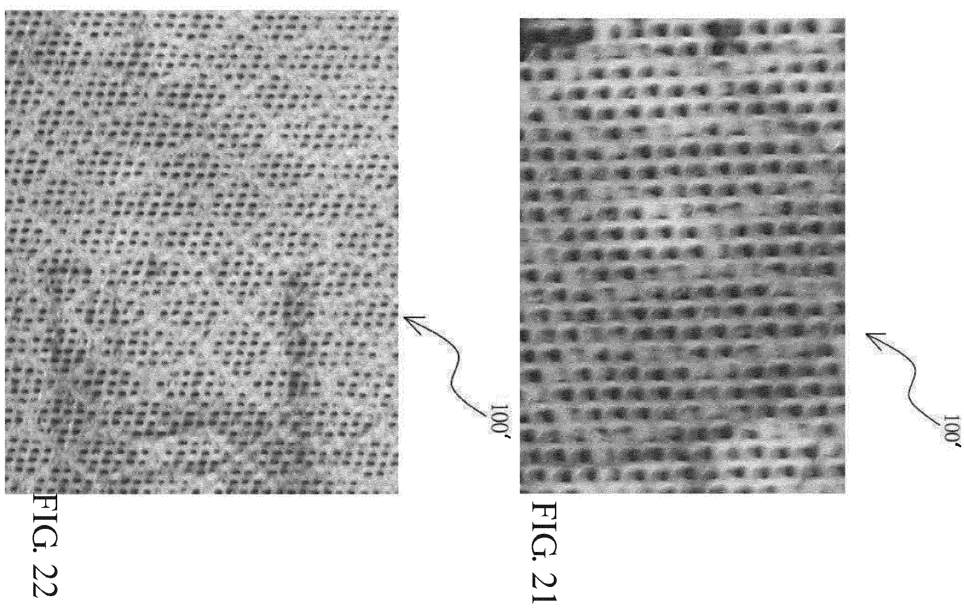

Figs. 18 and 19 show the plastic film 4 printed with the image pattern 5 (a plurality of balloons) and the mesh screen 3, respectively, before perforating the plastic film 4 and bonding of the plastic film 4 to the mesh screen 3 to form an embodiment of the mesh screen assembly 100' . Fig. 20 shows a front side of the embodiment of the mesh screen assembly 100' made from the plastic film 4 of Fig. 18 and the mesh screen 3 of Fig. 19. Fig. 21 shows a portion of the mesh screen assembly 100' of Fig. 20. Fig. 22 shows a back side of the embodiment of the mesh screen assembly 100' (the balloons can also be seen at the back side) made from the plastic film 4 of Fig. 18 and the mesh screen 3' of Fig. 19.

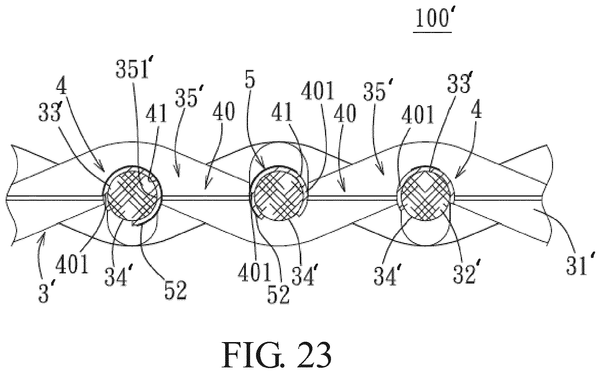

Fig. 23 illustrates the fourth preferred embodiment of the mesh screen assembly 100' according to the present invention. The second preferred embodiment differs from the third embodiment in that the aperture-defining wall 401 of each of the apertures 40 further extends through the respective one of the screen-holes 35', and further wraps around and is bonded to a portion of the second surface 34' of the mesh screen 3'. In this embodiment, at least a portion 52 of the image pattern 5 extends through adjacent ones of the screen-holes 35', and is disposed on the portion of the second surface 34' of the mesh screen 3', thereby permitting viewing of the portion 52 of the image pattern 5 from the back side of mesh screen assembly 100'.

Moreover, just like mentioned in the first embodiment, the warp threads 31' and weft threads 32' can also be arranged into many structural patterns 36'. That is to say, two sides of the embodiment of the mesh screen assembly 100' can show different patterns if necessary.

## Claims

1. A patterned fabric (100) with an image pattern (5), comprising:
a fabric sheet (3) having opposite first and second surfaces (33, 34) and a plurality of pores (35) extending through said first and second surfaces (33, 34), each of said pores (35) being defined by a pore-defining wall (351); and
a plastic film (4) bonded to said first surface (33) of said fabric sheet (3) and having opposite first and second faces (41, 42) and an image pattern (5) formed on said first face (41), said plastic film (4) being perforated to form a plurality of through-holes (40) extending through said first and second faces (41, 42), each of said through-holes (40) being defined by a hole-defining wall (401);
wherein said hole-defining wall (401) of each of said through-holes (40) extends into a respective one of said pores (35) and wraps around and is bonded to at least a portion of said pore-defining wall (351) of the respective one of said pores (35).

2. The patterned fabric (100) of claim 1, wherein at least a portion of said image pattern (5) extends into adjacent ones of said pores (35).

3. The patterned fabric (100) of claim 1, wherein said fabric sheet (3) is in the form of a woven fabric or a non-woven fabric.

4. The patterned fabric (100) of claim 1, wherein said image pattern (5) is made from an ink material printed on said plastic film (4).

5. The patterned fabric (100) of claim 1, wherein said plastic film (4) is made from a thermoplastic material selected from the group consisting of polyolefins, polyesters and thermoplastic elastomers.

6. The patterned fabric (100) of claim 1, wherein said hole-defining wall (401) of each of said through-holes (40) further extends through the respective one of said pores (35), and further wraps around and is bonded to a portion of said second surface (34) of said fabric sheet (3), at least a portion of said image pattern (5) extending through adjacent ones of said pores (35) and being disposed on said portion of said second surface (34) of said fabric sheet (3).

7. The patterned fabric (100) of claim 1, wherein said fabric sheet (3) has warp yarns (31) and weft yarns (32) that are interlaced to form the pores (35).

8. The patterned fabric (100) of claim 7, wherein said fabric sheet (3) has warp yarns (31) and weft yarns (32) that are arranged into a structural pattern (36').

## Patentansprüche

1. Gemusterter Stoff (100) mit einem Bildmuster (5), mit:
einer Stoffbahn (3) mit einer ersten und einer zweiten Oberfläche (33, 34), die einander gegenüberliegen, und mit mehreren Poren (35), die sich durch die erste und die zweite Oberfläche (33, 34) erstrecken, wobei jede der Poren (35) durch eine porendefinierende Wand (351) definiert ist; und
einer Kunststofffolie (4), die mit der ersten Oberfläche (33) der Stoffbahn (3) verbunden ist und eine erste und eine zweite Fläche (41, 42), die einander gegenüberliegen, und ein auf der ersten Fläche (41) ausgebildetes Bildmuster (5) aufweist, wobei die Kunststofffolie (4) perforiert ist, um mehrere Durchgangslöcher (40) zu bilden, die sich durch die erste und die zweite Fläche (41, 42) erstrecken, wobei jedes der Durchgangslöcher (40) durch eine lochdefinierende Wand (401) definiert ist,
wobei sich die lochdefinierende Wand (401) jedes der Durchgangslöcher (40) in eine jeweilige der Poren (35) erstreckt und sich um mindestens einen Abschnitt der porendefinierenden Wand (351) der jeweiligen einen der Poren (35) legt und damit verbunden ist.

2. Gemusterter Stoff (100) nach Anspruch 1, wobei sich mindestens ein Abschnitt des Bildmusters (5) in benachbarte der Poren (35) erstreckt.

3. Gemusterter Stoff (100) nach Anspruch 1, wobei die Stoffbahn (3) die Form eines Gewebes oder eines Vliesstoffs aufweist.

4. Gemusterter Stoff (100) nach Anspruch 1, wobei das Bildmuster (5) aus einem Tintenmaterial hergestellt ist, das auf die Kunststofffolie (4) aufgedruckt ist.

5. Strukturierter Stoff (100) nach Anspruch 1, wobei die Kunststofffolie (4) aus einem thermoplastischen Material hergestellt ist, das ausgewählt ist aus der Gruppe bestehend aus Polyolefinen, Polyestern und thermoplastischen Elastomeren.

6. Gemusterter Stoff (100) nach Anspruch 1, wobei sich die lochdefinierende Wand (401) jedes der Durchgangslöcher (40) ferner durch jeweilige der Poren (35) erstreckt und sich ferner um einen Abschnitt der zweiten Oberfläche (34) der Stoffbahn (3) legt und damit verbunden ist, wobei sich mindestens ein Abschnitt des Bildmusters (5) durch benachbarte der Poren (35) erstreckt und auf dem Abschnitt der zweiten Oberfläche (34) der Stoffbahn (3) angeordnet ist.

7. Gemusterter Stoff (100) nach Anspruch 1, wobei die Stoffbahn (3) Kettfäden (31) und Schussfäden (32) aufweist, die miteinander verflochten sind, um die Poren (35) zu bilden.

8. Gemusterter Stoff (100) nach Anspruch 7, wobei die Stoffbahn (3) Kettfäden (31) und Schussfäden (32) aufweist, die in einem Strukturmuster (36') angeordnet sind.

## Revendications

1. Tissu à motifs (100) avec un motif d'image (5) comprenant :
une feuille de tissu (3) ayant des première et seconde surfaces (33, 34) opposées et une pluralité de pores (35) s'étendant à travers lesdites première et seconde surfaces (33, 34), chacun desdits pores (35) étant défini par une paroi définissant le pore (351) ; et
un film plastique (4), collé à ladite première surface (33) de ladite feuille de tissu (3) et ayant des première et seconde faces (41, 42) opposées et un motif d'image (5) formé sur ladite première face (41), ledit film plastique (4) étant perforé pour former une pluralité de trous traversants (40) s'étendant à travers lesdites première et seconde faces (41, 42), chacun desdits trous traversants (40) étant défini par une paroi définissant le trou (401) ;
où ladite paroi définissant le trou (401) de chacun desdits trous traversants (40) s'étend dans un pore respectif desdits pores (35) et s'enroule autour et est collée à au moins une partie de ladite paroi définissant le pore (351) du pore respectif desdits pores (35).

2. Tissu à motifs (100) selon la revendication 1, dans lequel au moins une partie dudit motif d'image (5) s'étend dans des pores adjacents desdits pores (35).

3. Tissu à motifs (100) selon la revendication 1, dans lequel ladite feuille de tissu (3) est sous la forme d'un tissu tissé ou d'un tissu non tissé.

4. Tissu à motifs (100) selon la revendication 1, dans lequel ledit motif d'image (5) est fait à partir d'un matériau d'encre imprimé sur ledit film plastique (4).

5. Tissu à motifs (100) selon la revendication 1, dans lequel ledit film plastique (4) est fait à partir d'un matériau thermoplastique choisi dans le groupe constitué des polyoléfines, des polyesters et des élastomères thermoplastiques.

6. Tissu à motifs (100) selon la revendication 1, dans lequel ladite paroi définissant le trou (401) de chacun desdits trous traversants (40) s'étend en outre à travers les pores respectifs desdits pores (35) et s'enroule en outre autour et est collée à une partie de ladite seconde surface (34) de ladite feuille de tissu (3), au moins une partie dudit motif d'image (5) s'étendant à travers des pores adjacents desdits pores (35) et étant disposée sur ladite partie de ladite seconde surface (34) de ladite feuille de tissu (3).

7. Tissu à motifs (100) selon la revendication 1, dans lequel ladite feuille de tissu (3) a des fils de chaîne (31) et des fils de trame (32) qui sont entrelacés pour former les pores (35).

8. Tissu à motifs (100) selon la revendication 7, dans lequel ladite feuille de tissu (3) a des fils de chaîne (31) et des fils de trame (32) qui sont agencés dans un motif structurel (36').
